(19) Europäisches Patentamt
European Patent Office
Office européen des brevets

(11) EP 3 073 159 B1

(12) EUROPEAN PATENT SPECIFICATION

(45) Date of publication and mention
of the grant of the patent:
08.08.2018 Bulletin 2018/32

(51) Int Cl.:
*F16J 15/34* (2006.01)

(21) Application number: 14863659.0

(86) International application number:
PCT/JP2014/080715

(22) Date of filing: 20.11.2014

(87) International publication number:
WO 2015/076319 (28.05.2015 Gazette 2015/21)

(54) SLIDING COMPONENT

GLEITKOMPONENTE

ÉLÉMENT DE COULISSEMENT

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 22.11.2013 JP 2013242187

(43) Date of publication of application:
28.09.2016 Bulletin 2016/39

(73) Proprietor: Eagle Industry Co., Ltd.
Minato-ku
Tokyo 105-8587 (JP)

(72) Inventors:
• ITADANI Masatoshi
Tokyo 105-8587 (JP)
• SUNAGAWA Kazumasa
Tokyo 105-8587 (JP)
• TOKUNAGA Yuuichiro
Tokyo 105-8587 (JP)
• YAMAKAWA Ryoma
Tokyo 105-8587 (JP)

(74) Representative: WSL Patentanwälte Partnerschaft
mbB
Kaiser-Friedrich-Ring 98
65185 Wiesbaden (DE)

(56) References cited:
DE-B- 1 221 865      JP-A- H0 735 242
JP-A- S6 449 771     JP-A- S57 146 955
JP-U- H0 417 570     JP-U- H01 133 572
JP-U- H04 101 077    US-B1- 6 446 976

## Description

{TECHNICAL FIELD}

The present invention relates to sliding parts suitable for a mechanical seal, a bearing, and other sliding portions for example. In particular, the present invention relates to sliding parts such as a sealing ring or a bearing in which a fluid lies on sealing faces to reduce friction and there is a need for preventing fluid leakage from the sealing faces.

{BACKGROUND ART}

In a mechanical seal serving as one example of the sliding parts, performances thereof are evaluated by a leakage amount, a wear amount, and torque. In the prior art, the performances are enhanced by optimizing sliding material and sealing face roughness of the mechanical seal, so as to realize low leakage, long life, and low torque. However, due to raising awareness of environmental problems in recent years, further improvement in the performances of the mechanical seal is required, and there is a need for technical development going beyond the boundary of the prior art.

Under such circumstances, for example, in a mechanical seal of a water pump used for cooling a water cooling type engine, the present inventor confirmed that over time, LLC additive agents serving as a kind of an antifreeze such as silicate and phosphate (hereinafter, referred to as the "sediment causative substances") are concentrated on sealing faces, sediment is generated, and there is a fear that functions of the mechanical seal are lowered. This generation of the sediment is thought to be a phenomenon that is similarly generated in a mechanical seal of a device in which chemicals and oil are used.

In the conventional mechanical seal, a mechanical seal in which a fluid introduction groove for forming a fluid layer on a sealing face is formed in order to prevent generation of wear and burnout due to friction heat generation of the sealing face is known (for example, refer to Patent Citations 1, 2, 3) . However, a mechanical seal to offer a measure for preventing generation of sediment on a sealing face in addition to reduction of leakage and wear is not proposed in a current situation.

{CITATION LIST}

{Patent Literature}

Patent Citation 1: JP7-180772 A
Patent Citation 2: JP7-224948 A
Patent Citation 3: US5,498,007 A
Patent citation 4: DE-B-1221865

{SUMMARY OF INVENTION}

{Technical Problem}

An objective of the present invention is to provide sliding parts by which a sealing function of sealing faces can be maintained for a long time by actively taking a fluid into the sealing faces and discharging the fluid from the sealing faces while meeting contradictory conditions of sealing and lubrication so as to prevent concentration of sediment causative substances on the sealing faces and hence prevent generation of sediment.

{Solution to Problem}

In order to achieve the foregoing objective, a first aspect of the sliding parts of the present invention is a pair of sliding parts including sealing faces that relatively slide on each other, characterized in that a fluid circulation groove including an inlet section where a fluid comes in from a high pressure fluid side, an outlet section where the fluid goes out to the high pressure fluid side, and a communication section that provides communication between the inlet section and the outlet section is provided in at least one of the sealing faces, the fluid circulation groove is isolated from a low pressure fluid side by a land section, and a section of a bottom wall of the fluid circulation groove is formed in a round bottom shape.

According to this aspect, the sliding parts by which a sealing function of the sealing faces can be maintained for a long time by actively taking the fluid into the sealing faces and discharging the fluid from the sealing faces while meeting contradictory conditions of sealing and lubrication so as to prevent concentration of sediment causative substances on the sealing faces and hence prevent generation of sediment can be provided.

In particular, since the section of the bottom wall of the fluid circulation groove is formed in a round bottom shape, retention of the fluid in the vicinity of the bottom wall is prevented, and a fluid circulation effect can be more improved.

A second aspect of the sliding parts of the present invention relates to the first aspect, characterized in that a plurality of the fluid circulation grooves is provided in the circumferential direction of the sealing face and isolated by the land section, and the inlet section and the outlet section are inclined in the directions in which the sections respectively open from the low pressure side toward the high pressure side in a plan view.

According to this aspect, the fluid can be easily taken in and discharged evenly over the entire sealing faces.

A third aspect of the sliding parts of the present invention relates to the first or second aspect, characterized in that a positive pressure generation mechanism including a positive pressure generation groove that is shallower than the fluid circulation groove is provided in a part surrounded by the fluid circulation groove and the high pressure fluid side, and the positive pressure generation mechanism communicates with the inlet section, and is isolated from the outlet section and the high pressure fluid side by the land section.

According to this aspect, the sliding parts by which a lubrication performance can be improved by increasing a fluid film between the sealing faces and the generation of the sediment on the sealing faces can be prevented while meeting the contradictory conditions of the sealing and the lubrication by sealing by the land section can be provided.

A fourth aspect of the sliding parts of the present invention relates to the third aspect, characterized in that the positive pressure generation mechanism is formed from a Rayleigh step mechanism.

According to this aspect, by providing a Rayleigh step in the sealing face, the positive pressure generation can be easily formed.

A fifth aspect of the sliding parts of the present invention relates to any of the first to fourth aspects, characterized in that a spiral groove through which the fluid is discharged to the high pressure fluid side by relative sliding of the sliding parts is provided on the outside of the part surrounded by the fluid circulation groove of one of the sealing faces and the high pressure fluid side, and the spiral groove communicates with the high pressure fluid side, and is isolated from the low pressure fluid side by the land section.

According to this aspect, a sealed fluid to be leaked out from the high pressure fluid side to the low pressure fluid side is pushed back to the high pressure fluid side between the adjacent fluid circulation grooves where no positive pressure generation mechanism is provided. Thus, a sealing property is improved, so that a sealing property of the entire sealing faces can be improved. Since the spiral groove is isolated from the low pressure fluid side by the land section, no leakage is generated in a static state.

A sixth aspect of the sliding parts of the present invention relates to any of the first to fourth aspects, characterized in that a negative pressure generation mechanism including a negative pressure generation groove that is shallower than the fluid circulation groove is provided on the outside of the part surrounded by the fluid circulation groove of one of the sealing faces and the high pressure fluid side, and the negative pressure generation groove communicates with the inlet section, and is isolated from the outlet section and the low pressure fluid side by the land section.

According to this aspect, by taking the sealed fluid to be leaked out from the high pressure fluid side to the low pressure fluid side between the adjacent fluid circulation grooves in the part where no Rayleigh step mechanism is provided into the negative pressure generation groove, and returning the fluid to the high pressure fluid side via the fluid circulation groove, the sealing property is improved, so that the sealing property of the entire sealing faces can be improved.

A seventh aspect of the sliding parts of the present invention relates to the sixth aspect, characterized in that the negative pressure generation mechanism is formed from a reversed Rayleigh step mechanism.

According to this aspect, by providing a reversed Rayleigh step in the sealing face, the negative pressure generation mechanism can be easily formed.

An eighth aspect of the sliding parts of the present invention relates to any of the first to seventh aspects, characterized in that at least a sectional area of the groove in the inlet section or the outlet section is set to be different from a sectional area of the groove in the communication section in such a manner that pressure of the fluid flowing through the fluid circulation groove is lowered in the communication section.

According to this aspect, the sliding parts by which the sealing function of the sealing faces can be maintained for a long time by lowering the pressure of the fluid flowing through the fluid circulation groove in the communication section and preventing leakage of the fluid taken into the sealing faces to the low pressure fluid side can be provided.

A ninth aspect of the sliding parts of the present invention relates to the eighth aspect, characterized in that the sectional area of the groove in the inlet section is set to be smaller than the sectional area of the groove in the communication section and the outlet section.

According to this aspect, while ensuring intake of the fluid to the sealing faces, the pressure of the fluid flowing through the fluid circulation groove can be lowered in the communication section.

A tenth aspect of the sliding parts of the present invention relates to the eighth aspect, characterized in that the sectional area of the groove in the outlet section is set to be larger than the sectional area of the groove in the communication section and the inlet section.

According to this aspect, while ensuring the intake of the fluid to the sealing faces, the pressure of the fluid flowing through the fluid circulation groove can be lowered in the communication section.

{Advantageous Effects of Invention}

The present invention exhibits the following superior effects.

(1) The sliding parts by which the sealing function of the sealing faces can be maintained for a long time by actively taking the fluid into the sealing faces and discharging the fluid from the sealing faces while meeting the contradictory conditions of the sealing and the lubrication so as to prevent the concentration of the sediment causative substances on the sealing faces and hence prevent the generation of the sediment can be provided.

In particular, since the section of the bottom wall of the fluid circulation groove is formed in a round bottom shape, the retention of the fluid in the vicinity of the bottom wall is prevented, and the fluid circulation effect can be more improved.

(2) The plurality of fluid circulation grooves is provided in the circumferential direction of the sealing face and isolated by the land section, and the inlet section and the outlet section are inclined in the directions in which the sections respectively open from the low pressure side toward the high pressure side in a plan view. Thereby, the fluid can be easily taken in and discharged evenly over the entire sealing faces.

(3) The positive pressure generation mechanism including the positive pressure generation groove that is shallower than the fluid circulation groove is provided in the part surrounded by the fluid circulation groove and the high pressure fluid side, and the positive pressure generation mechanism communicates with the inlet section, and is isolated from the outlet section and the high pressure fluid side by the land section. Thereby, the sliding parts by which the lubrication performance can be improved by increasing the fluid film between the sealing faces and the generation of the sediment on the sealing faces can be prevented while meeting the contradictory conditions of the sealing and the lubrication by sealing by the land section can be provided.

(4) The positive pressure generation mechanism is formed from the Rayleigh step mechanism. Thereby, by providing the Rayleigh step in the sealing face, the positive pressure generation can be easily formed.

(5) The spiral groove through which the fluid is discharged to the high pressure fluid side by the relative sliding of the sliding parts is provided on the outside of the part surrounded by the fluid circulation groove of one of the sealing faces and the high pressure fluid side, and the spiral groove communicates with the high pressure fluid side, and is isolated from the low pressure fluid side by the land section. Thereby, the sealed fluid to be leaked out from the high pressure fluid side to the low pressure fluid side is pushed back to the high pressure fluid side between the adjacent fluid circulation grooves where no positive pressure generation mechanism is provided. Thus, the sealing property is improved, so that the sealing property of the entire sealing faces can be improved. Since the spiral groove is isolated from the low pressure fluid side by the land section, no leakage is generated in a static state.

(6) The negative pressure generation mechanism including the negative pressure generation groove that is shallower than the fluid circulation groove is provided on the outside of the part surrounded by the fluid circulation groove of one of the sealing faces and the high pressure fluid side, and the negative pressure generation groove communicates with the inlet section, and is isolated from the outlet section and the low pressure fluid side by the land section.

Thereby, by taking the sealed fluid to be leaked out from the high pressure fluid side to the low pressure fluid side between the adjacent fluid circulation grooves in the part where no Rayleigh step mechanism is provided into the negative pressure generation groove, and returning the fluid to the high pressure fluid side via the fluid circulation groove, the sealing property is improved, so that the sealing property of the entire sealing faces can be improved.

(7) The negative pressure generation mechanism is formed from the reversed Rayleigh step mechanism. Thereby, by providing the reversed Rayleigh step in the sealing face, the negative pressure generation mechanism can be easily formed.

(8) At least the sectional area of the groove in the inlet section or the outlet section is set to be different from the sectional area of the groove in the communication section in such a manner that the pressure of the fluid flowing through the fluid circulation groove is lowered in the communication section. Thereby, the sliding parts by which the sealing function of the sealing faces can be maintained for a long time by lowering the pressure of the fluid flowing through the fluid circulation groove in the communication section and preventing the leakage of the fluid taken into the sealing faces to the low pressure fluid side can be provided.

(9) The sectional area of the groove in the inlet section is set to be smaller or larger than the sectional area of the groove in the communication section and the outlet section. Thereby, while ensuring the intake of the fluid to the sealing faces, the pressure of the fluid flowing through the fluid circulation groove can be lowered in the communication section.

{BRIEF DESCRIPTION OF DRAWINGS}

FIG. 1 is a vertically sectional view showing one example of a mechanical seal according to a first embodiment of the present invention;

FIG. 2 shows a sealing face of a sliding part according to the first embodiment of the present invention, showing a case where a plurality of fluid circulation grooves is provided in the circumferential direction independently from each other;

FIG. 3 is a sectional view taken along the line A-A of FIG. 2;

FIG. 4 shows a sealing face of a sliding part according to a second embodiment of the present invention;

FIG. 5 shows a sealing face of a sliding part according to a third embodiment of the present invention;

FIG. 6 shows a sealing face of a sliding part according to a fourth embodiment of the present invention;

FIG. 7 is a sectional view taken along the line B-B of FIG. 6;

FIG. 8 is a view for illustrating a positive pressure generation mechanism formed from a Rayleigh step mechanism or the like, and a negative pressure generation mechanism formed from a reversed Rayleigh step mechanism or the like: FIG. 8 (a) shows the Rayleigh step mechanism; and FIG. 8(b) shows the reversed Rayleigh step mechanism; and

FIG. 9 is an illustrative view representing a result of a CFD analysis of a relationship between a sectional shape of a bottom wall of the fluid circulation groove and retention of a fluid flowing in the fluid circulation groove.

{DESCRIPTION OF EMBODIMENTS}

Hereinafter, with reference to the drawings, modes for carrying out the present invention will be described with examples based on embodiments. However, regarding size, material, shape, and relative arrangement of constituent parts described in the embodiments, and the like, there is no intention to limit the scope of the present invention only to those unless specifically and clearly described.

First Embodiment

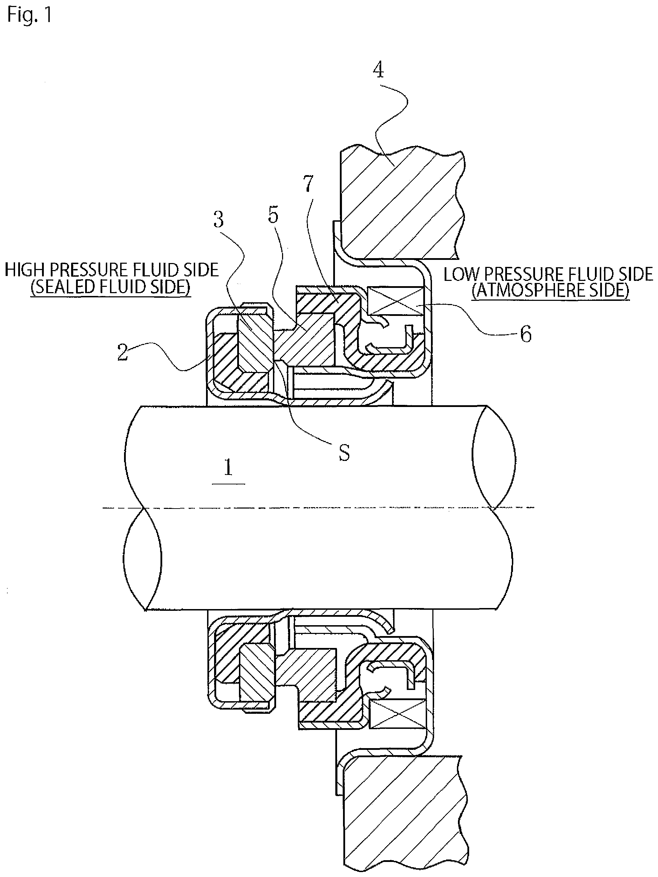

With reference to FIGS. 1 to 3, sliding parts according to a first embodiment of the present invention will be described.

It should be noted that in the following embodiment, a mechanical seal serving as one example of the sliding parts will be described as an example. In the description, an outer peripheral side of the sliding parts that form the mechanical seal serves as a high pressure fluid side (sealed fluid side), and an inner peripheral side serves as a low pressure fluid side (atmosphere side). However, the present invention is not limited to this but can also be applied to a case where the high pressure fluid side and the low pressure fluid side are set the other way around.

FIG. 1 is a vertically sectional view showing one example of the mechanical seal that is an inside mechanical seal for sealing a sealed fluid on the high pressure fluid side to be leaked out from an outer periphery of a sealing face toward an inner periphery. In the mechanical seal, on the side of a rotating shaft 1 that drives a pump impeller (not shown) on the high pressure fluid side, an annular rotating ring 3 serving as one of the sliding parts is provided via a sleeve 2 in a state that the rotating ring can be rotated integrally with this rotating shaft 1, an annular stationary ring 5 serving as the other sliding part is provided in a housing 4 of a pump in a state that the stationary ring is not rotated but can be moved in the axial direction, and sealing faces S mirror-finished by lapping or the like closely slide on each other by means of a coiled wave spring 6 and bellows 7 that bias the stationary ring 5 in the axial direction. That is, this mechanical seal is to prevent the sealed fluid from flowing out from an outer periphery of the rotating shaft 1 to the atmosphere side on the sealing faces S of the rotating ring 3 and the stationary ring 5.

It should be noted that although FIG. 1 shows a case where the sealing face width of the rotating ring 3 is greater than the sealing face width of the stationary ring 5, the present invention is not limited to this but can be applied to an opposite case as a matter of course.

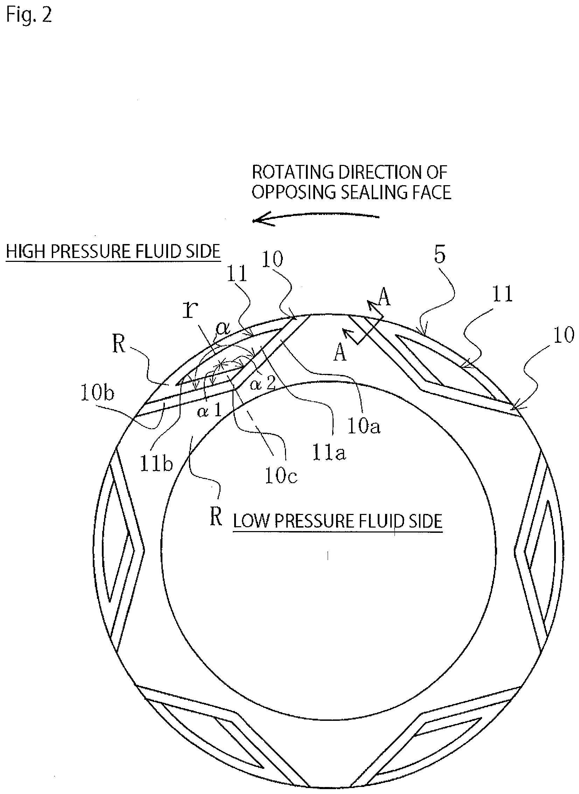

FIG. 2 shows the sealing face of the sliding part according to the first embodiment of the present invention. A case where fluid circulation grooves are formed on the sealing face of the stationary ring 5 of FIG. 2 will be described as an example.

It should be noted that a case where the fluid circulation grooves are formed on the sealing face of the rotating ring 3 is basically similar. However, in that case, the fluid circulation grooves are only required to communicate with the sealed fluid side and hence not required to be provided up to the outer peripheral side of the sealing face.

In FIG. 2, the outer peripheral side of the sealing face of the stationary ring 5 serves as the high pressure fluid side, the inner peripheral side serves as the low pressure fluid side such as the atmosphere side, and the opposing sealing face is rotated anti-clockwise.

On the sealing face of the stationary ring 5, a plurality of fluid circulation grooves 10 that communicates with the high pressure fluid side and is isolated from the low pressure fluid side by a smooth section R (sometimes referred to as the "land section" in the present invention) of the sealing face is provided in the circumferential direction.

Each of the fluid circulation grooves 10 includes an inlet section 10a where the fluid comes in from the high pressure fluid side, an outlet section 10b where the fluid goes out to the high pressure fluid side, and a communication section 10c that provides communication between the inlet section 10a and the outlet section 10b in the circumferential direction, and is isolated from the lower pressure fluid side by the land section R. The fluid circulation groove 10 plays a role of actively introducing the sealed fluid onto the sealing face from the high pressure fluid side and discharging the fluid in order to prevent concentration of the fluid containing corrosion products and the like on the sealing face. The inlet section 10a and the outlet section 10b are formed in such a manner that the sealed fluid is easily taken onto the sealing face and discharged in accordance with the rotating direction of the opposing sealing face, while the fluid circulation groove is isolated from the low pressure fluid side by the land section R in order to reduce leakage.

It should be noted that the shape of the fluid circulation groove can be formed in various modes such as a substantially V shape shown in FIG. 2 or a substantially U shape. However, in the present specification, in principle, the "inlet section where the fluid comes in from the high pressure fluid side" indicates a part heading off in the inner diameter direction of the fluid circulation groove, and the "outlet section where the fluid goes out to the high pressure fluid side" indicates a part heading off in the outer diameter direction of the fluid circulation groove in the description. Therefore, the "communication section that provides communication between the inlet section and the outlet section" may be extremely short or may have appropriate length.

In this example, the fluid circulation groove 10 is formed in a shape substantially left-right symmetric with respect to a radius line r of the sealing face in a plan view of the sealing face, and an intersection angle α on the high pressure fluid side made by left and right parts of the fluid circulation groove 10, that is, the inlet section 10a and the outlet section 10b is set within a range from 120° to 180°.

It should be noted that the shape of the fluid circulation groove 10 in a plan view is not necessarily a shape left-right symmetric with respect to the radius line r but an intersection angle α1 of the inlet section 10a may be larger than an intersection angle α2 of the outlet section 10b and vice versa.

In the present specification, the phrase "substantially left-right symmetric" indicates a range of α1 = α2 ± 5°.

A preferable range of the intersection angle α is a range from 120° to 180°. However, the present invention is not limited to a range from 120° to 180°.

Further, the shape of the fluid circulation groove 10 in a plan view may be formed in a curved shape (such as an arc shape) as a whole without having a linear part.

The width and the depth of the fluid circulation groove 10 may be set to be optimal in accordance with pressure, a type (viscosity), and the like of the sealed fluid.

The fluid circulation groove 10 shown in FIG. 2 is left-right symmetric, and the intersection angle α is as large as 160°. Thus, an inflow of the sealed fluid to the inlet section 10a and a discharge of the sealed fluid from the outlet section 10b are easily performed.

On the sealing face in which the fluid circulation grooves 10 are provided, a positive pressure generation mechanism 11 including a positive pressure generation groove 11a that is shallower than the fluid circulation groove 10 is provided in a part surrounded by each of the fluid circulation grooves 10 and the high pressure fluid side. The positive pressure generation mechanism 11 increases a fluid film between the sealing faces by generating positive pressure (dynamic pressure), so as to improve a lubrication performance.

The positive pressure generation groove 11a communicates with the inlet section of the fluid circulation groove 10, and is isolated from the outlet section 10b and the high pressure fluid side by the land section R.

In this example, the positive pressure generation mechanism 11 is formed from a Rayleigh step mechanism including the positive pressure generation groove 11a that communicates with the inlet section 10a of the fluid circulation groove 10 and a Rayleigh step 11b. However, the present invention is not limited to this. For example, the positive pressure generation mechanism may be formed from a femto groove with a dam, that is, any mechanism that generates positive pressure.

It should be noted that the Rayleigh step mechanism and a reversed Rayleigh step mechanism will be described in detail later.

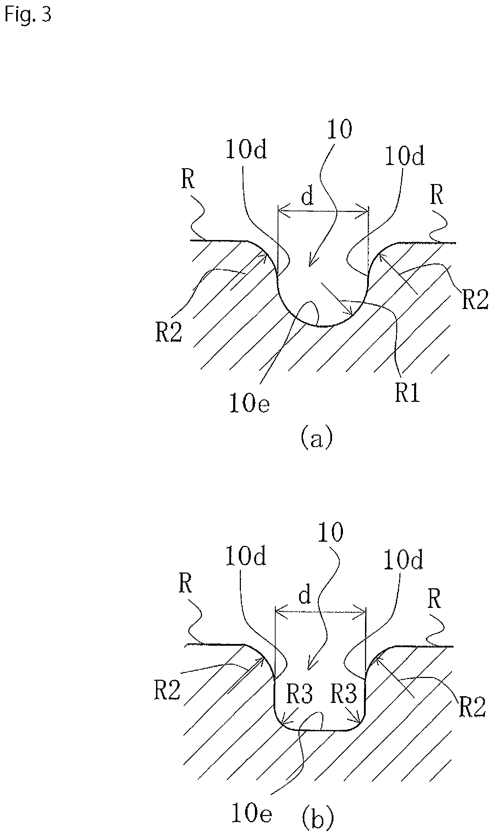

Next, with reference to FIG. 3, a sectional shape of the fluid circulation groove 10 will be described.

It should be noted that in the present invention, a section of the fluid circulation groove indicates a section orthogonal to the longitudinal direction of the fluid circulation groove.

In FIG. 3(a), the fluid circulation groove 10 includes both side walls 10d, 10d and a bottom wall 10e. A section of the bottom wall 10e is formed in a round bottom shape connected by a single arc leading to both the side walls 10d, 10d.

That is, a radius R1 of the arc is set as:

$$R1 \geq d / 2$$

wherein the groove width is d. Therefore, the bottom wall 10e is formed in a round bottom shape connected by the single arc of the radius R1.

Both the side walls 10d, 10d and the land section R are connected by arcs of a radius R2.

FIG. 3(b) shows another example of the sectional shape of the fluid circulation groove 10.

In this example, both the side walls 10d, 10d and the bottom wall 10e of the fluid circulation groove 10 are connected by arcs of a radius R3 at both corners. Size of the radius R3 is set as:

$$d / 3 < R3 < d / 2$$

wherein the groove width is d. Therefore, although a center part of the bottom wall 10e partly includes a straight part, the bottom wall is formed in a round bottom shape as a whole.

It should be noted that since a purpose is different from general rounding processing for corner portions, the radius R3 is set to be larger than a radius in the rounding processing.

The shape of the bottom wall 10e is not necessarily limited to the round bottom shape by which both the side walls 10d, 10d and the bottom wall 10e are connected by the single arc of the radius R1 or connected respectively by the arcs of the radius R3 at both the corners. For example, the shape includes a round bottom shape formed by an ellipse or a smooth curve.

It should be noted that in the present invention, the round bottom shapes shown in FIGS. 3(a) and 3(b) and in addition the round bottom shape formed by an ellipse or a smooth curve are collectively rephrased as the "section of the bottom wall of the fluid circulation groove is formed in a round bottom shape. "

As a method of forming the fluid circulation groove in which the section of the bottom wall is formed in a round bottom shape, for example, there is a method of molding the fluid circulation groove at the same time as manufacture of the sliding parts with a mold. Moreover, the fluid circulation groove may be molded by mechanical processing.

As described above, according to the configuration of the first embodiment, by actively guiding the fluid to the sealing faces and discharging the fluid by the fluid circulation groove 10, the fluid between the sealing faces is circulated, concentration of the fluid containing sediment causative substances and the like and retention of wear powder and foreign substances are prevented, and hence formation of sediment is prevented, so that a sealing function of the sealing faces can be maintained for a long time. At the time, the fluid circulation groove 10 is isolated from the low pressure fluid side by the land section R. Thus, leakage of the fluid from the fluid circulation groove 10 to the low pressure fluid side can be reduced and leakage in a static state can also be prevented. At the same time, by increasing the fluid film between the sealing faces by the positive pressure generation mechanism 11, the lubrication performance is improved, so that circulation of the fluid between the sealing faces can be furthermore facilitated. Further, since the section of the bottom wall 10e of the fluid circulation groove 10 is formed in a round bottom shape, retention of the fluid in the vicinity of the bottom wall is prevented, and a fluid circulation effect can be more improved.

Second Embodiment

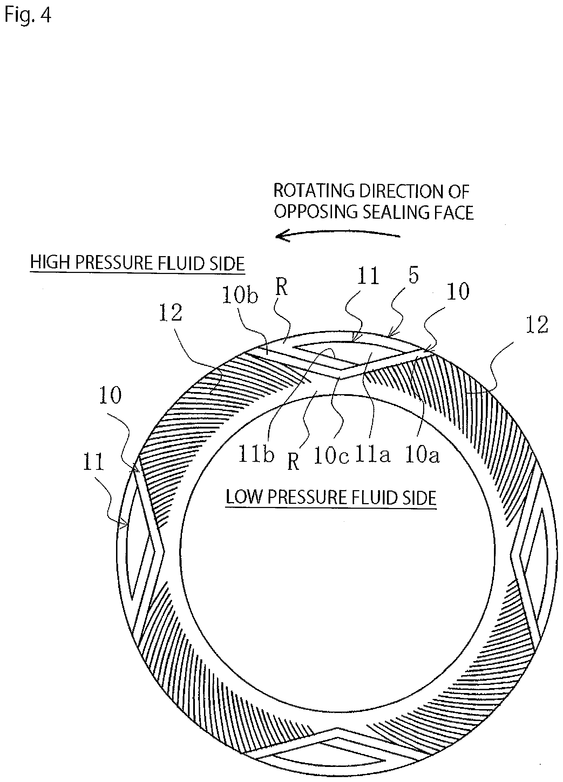

With reference to FIG. 4, sliding parts according to a second embodiment of the present invention will be described.

The sliding parts according to the second embodiment are different from the sliding parts of the first embodiment in a point that four fluid circulation grooves 10 are arranged on the sealing face at equal intervals in the circumferential direction and in a point that spiral grooves 12 through which the fluid is discharged to the high pressure fluid side are additionally provided in the sealing face. However, the other basic configurations are the same as the first embodiment. The same members will be given the same reference signs and duplicated description will be omitted.

In FIG. 4, the spiral grooves 12 through which the fluid is discharged to the high pressure fluid side by relative sliding of the rotating ring 3 and the stationary ring 5 are provided on the outside of a part surrounded by the fluid circulation groove 10 of the sealing face of the stationary ring 5 and the high pressure fluid side, that is, between the adjacent fluid circulation grooves 10 and 10. The plurality of spiral grooves 12 is provided in a curved form (spiral form) so as to be inclined anticlockwise from the inner peripheral side to the outer peripheral side, communicates with the high pressure fluid side, and is isolated from the low pressure fluid side by the land section R. The spiral grooves 12 play a role of pushing the sealed fluid to be leaked out from the high pressure fluid side to the low pressure fluid side back to the high pressure fluid side, so as to improve a sealing property. The spiral grooves prevent leakage between the adjacent fluid circulation grooves 10 and 10 where no positive pressure generation mechanism 11 is provided, so as to contribute to improvement of the sealing property of the entire sealing faces . Since the spiral grooves 12 are isolated from the low pressure fluid side by the land section R, no leakage is generated in a static state.

In this example, the section of the bottom wall of the fluid circulation groove 10 is formed in a round bottom shape as well as the first embodiment. Therefore, the retention of the fluid in the vicinity of the bottom wall is prevented, and the fluid circulation effect can be more improved.

Third Embodiment

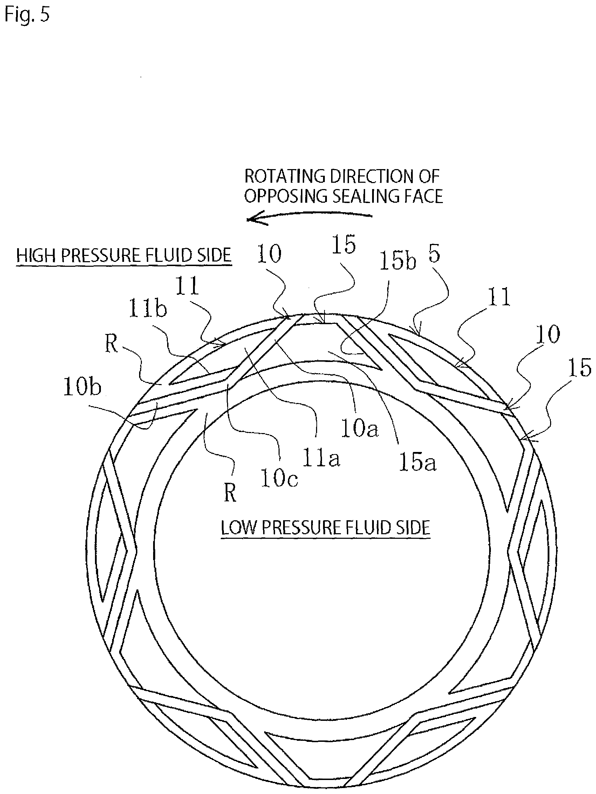

With reference to FIG. 5, sliding parts according to a third embodiment of the present invention will be described.

The sliding parts according to the third embodiment are different from the second embodiment shown in FIG. 4 in a point that reversed Rayleigh step mechanisms 15 are provided in place of the spiral grooves 12 of the second embodiment. However, the other basic configurations are the same as FIG. 4. The same members will be given the same reference signs and duplicated description will be omitted.

In FIG. 5, the six fluid circulation grooves 10 and the six Rayleigh step mechanisms 11 arranged at equal intervals in the circumferential direction are provided on the sealing face of the stationary ring 5, and further, the reversed Rayleigh step mechanism 15 that forms a negative pressure generation mechanism including a groove 15a and a reversed Rayleigh step 15b which form a negative pressure generation groove shallower than the fluid circulation groove 10 is provided on the outside of the part surrounded by each of the fluid circulation grooves 10 and the high pressure fluid side, that is, between the adjacent fluid circulation grooves 10, 10. The groove 15a communicates with the inlet section 10a, and is isolated from the outlet section 10b and the low pressure fluid side by the land section R.

In the third embodiment, the reversed Rayleigh step mechanism 15 that forms the negative pressure generation mechanism plays a role of taking the sealed fluid to be leaked out from the high pressure fluid side to the low pressure fluid side into the groove 15a by generation of negative pressure, and returning the fluid to the high pressure fluid side via the fluid circulation groove 10, so as to improve the sealing property. The reversed Rayleigh step mechanism prevents the leakage between the adjacent fluid circulation grooves 10 and 10 in the part where no Rayleigh step mechanism 15 is provided, so as to improve the sealing property of the entire sealing faces.

It should be noted that optimal values can be appropriately selected as the number of the Rayleigh step mechanism 11 and the reversed Rayleigh step mechanism 15 to be arranged at equal intervals, and the ratio of the length between the Rayleigh step mechanism 11 and the reversed Rayleigh step mechanism 15.

In this example, the section of the bottom wall of the fluid circulation groove 10 is formed in a round bottom shape as well as the first embodiment. Therefore, the retention of the fluid in the vicinity of the bottom wall is prevented, and the fluid circulation effect can be more improved.

Fourth Embodiment

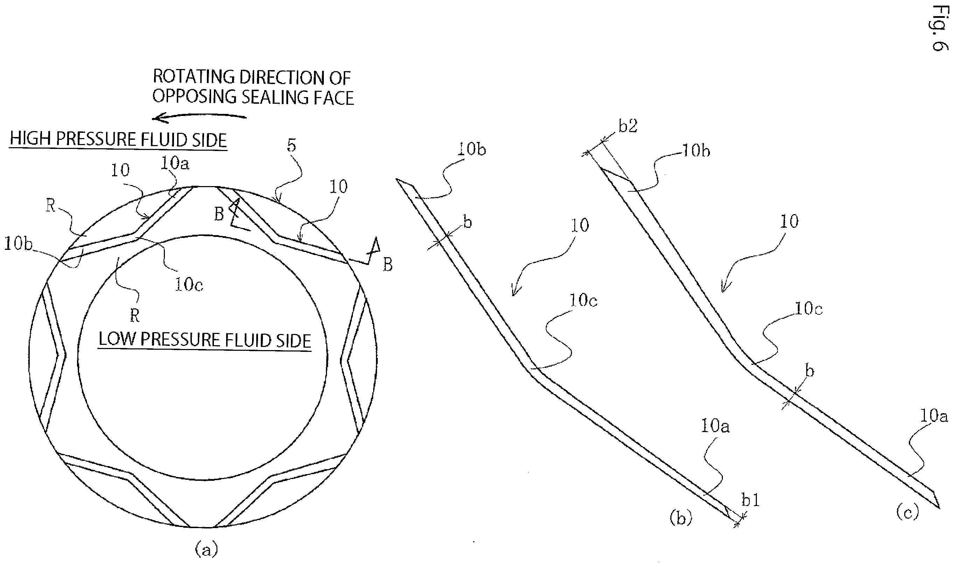

With reference to FIG. 6, sliding parts according to a fourth embodiment of the present invention will be described.

The sliding parts according to the fourth embodiment are different from the case of FIG. 2 in a point that a sectional area of the groove in the inlet section or the outlet section of the fluid circulation groove is set to be different from a sectional area of the groove in the communication section and in a point that no positive pressure generation mechanism is provided. However, the other basic configurations are the same as FIG. 2. The same members will be given the same reference signs and duplicated description will be omitted.

In FIG. 6(a), the fluid circulation groove 10 includes the inlet section 10a where the fluid comes in from the high pressure fluid side, the outlet section 10b where the fluid goes out to the high pressure fluid side, and the communication section 10c that provides communication between the inlet section 10a and the outlet section 10b in the circumferential direction. The fluid circulation groove 10 plays a role of actively introducing the sealed fluid onto the sealing face from the high pressure fluid side and discharging the fluid in order to prevent the concentration of the fluid containing corrosion products and the like on the sealing face. The inlet section 10a and the outlet section 10b are formed in such a manner that the sealed fluid is easily taken onto the sealing face and discharged in accordance with the rotating direction of the opposing sealing face, while the fluid circulation groove is isolated from the low pressure fluid side by the land section R in order to reduce the leakage.

It should be noted that although the fluid circulation groove 10 is isolated from the low pressure fluid side by the land section R, a tiny amount of leakage is unavoidable as long as there is pressure gradient with respect to the low pressure fluid side. Since the pressure gradient is the greatest in the communication section 10c which is near the low pressure fluid side as in the fluid circulation groove 10 shown in FIG. 6(a), the leakage of the fluid is easily generated from the communication section 10c.

In this example, in the fluid circulation groove 10, inclination angles of the inlet section 10a and the outlet section 10b are set to be large, both the sections are arranged in a substantially V form so as to cross each other on the low pressure fluid side (on the inner peripheral side in FIG. 6 (a)), and this crossing portion forms the communication section 10c. Although a crossing angle between the inlet section 10a and the outlet section 10b is an obtuse angle (such as about 150°), the present invention is not particularly limited to this. The inclination of the inlet section 10a and the outlet section 10b may be further increased, or the sections may be formed not in a linear shape but in a curved shape (such as an arc shape). The width and the depth of the fluid circulation groove 10 are set to be optimal in accordance with pressure, a type (viscosity), and the like of the sealed fluid. This point will be described in detail later.

In each of the fluid circulation grooves 10 shown in FIG. 6(a), the inclination angles of the inlet section 10a and the outlet section 10b are large. Thus, the fluid easily flows into the inlet section 10a and the fluid is easily discharged from the outlet section 10b. The length of the communication section 10c which is near the inflow low pressure fluid side is short. Thus, the leakage from the communication section 10c to the low pressure fluid side is reduced.

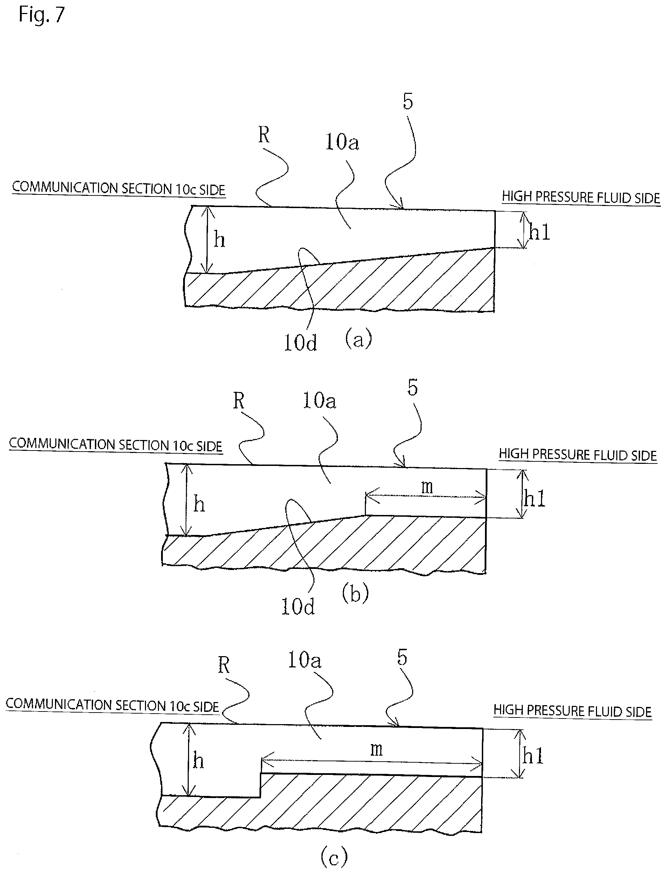

Next, with reference to FIGS. 6 and 7, a sectional shape of the fluid circulation groove will be described.

Firstly, with reference to FIGS. 6(b) and 6(c), a case where the sectional area of the groove is changed depending on the magnitude of the groove width of the fluid circulation groove 10 will be described.

FIG. 6(b) shows a case where the groove width b1 of the inlet section 10a is set to be smaller than the groove width b of the communication section 10c and the outlet section 10b. In this case, the groove depth of the inlet section 10a, the communication section 10c, and the outlet section 10b is fixed.

In the inlet section 10a shown in FIG. 6(b), the groove width is set to be b1 on an inlet face facing the high pressure fluid side and the inlet section is formed in a tapered shape in such a manner that the groove width is gently enlarged toward the communication section 10c and becomes the groove width b.

As a mode that the groove width b1 of the inlet section 10a is enlarged toward the communication section 10c, in addition to the case where the groove width is set to be the groove width b1 for a fixed distance from the inlet face facing the high pressure fluid side and then gently enlarged toward the communication section 10c, the groove width may be set to be the groove width b1 for the fixed distance from the inlet face facing the high pressure fluid side and then radically enlarged to the groove width b by a step section.

FIG. 6(c) shows a case where the groove width b2 of the outlet section 10b is set to be larger than the groove width b of the communication section 10c and the inlet section 10a. In this case, the groove depth of the inlet section 10a, the communication section 10c, and the outlet section 10b is the same.

The outlet section 10b shown in FIG. 6(c) is gently enlarged from the communication section 10c toward the outlet section 10b and formed in a tapered shape in such a manner that the groove width becomes b2 on an outlet face facing the high pressure fluid side.

As a mode that the groove width b2 of the outlet section 10b is enlarged from the communication section 10c toward the outlet section 10b, in addition to the case where the groove width is the groove width b2 for the fixed distance from the outlet face facing the high pressure fluid side and then set to be gently reduced toward the communication section 10c, the groove width may be the groove width b2 for the fixed distance from the outlet face facing the high pressure fluid side and then set to be radically reduced to the groove width b by a step section.

As described above, as shown in FIG. 6(b), even in a case where the groove width b1 of the inlet section 10a of the fluid circulation groove 10 is set to be smaller than the groove width b of the communication section 10c and the outlet section 10b and in a case where the groove depth is fixed, the sectional area of the groove is smaller in the inlet section 10a than in the communication section 10c and the outlet section 10b. Therefore, in comparison to a case where the sectional area in the inlet section 10a of the fluid circulation groove 10 is fixed as the same size as the communication section 10c and the outlet section 10b, an inflow amount of the fluid into the fluid circulation groove 10 is reduced, and pressure of the fluid in the communication section 10c which is the nearest to the low pressure fluid side is also reduced. As a result, the pressure gradient between the communication section 10c and the low pressure fluid side is decreased, so that the leakage from the communication section 10c which is the nearest to the low pressure fluid side is reduced.

As shown in FIG. 6(c), even in a case where the groove width b2 of the outlet section 10b is set to be larger than the groove width b of the communication section 10c and the inlet section 10a and in a case where the groove depth is fixed, the sectional area of the groove is larger in the outlet section 10b than in the communication section 10c and the outlet section 10b. Therefore, in comparison to a case where the sectional area in the outlet section 10b of the fluid circulation groove 10 is fixed as the same size as the communication section 10c and the inlet section 10a, discharge resistance of the fluid in the outlet section 10b is decreased, and the pressure of the fluid in the communication section 10c is reduced. As a result, the pressure gradient between the communication section 10c and the low pressure fluid side is decreased, so that the leakage from the communication section 10c which is the nearest to the low pressure fluid side is reduced.

Next, with reference to FIG. 7, a case where the sectional area of the groove is changed depending on the magnitude of the groove depth of the fluid circulation groove 10 will be described.

In FIG. 7(a), the groove depth h1 of the inlet section 10a of the fluid circulation groove is set to be smaller than the groove depth h of the communication section 10c and the outlet section 10b on the inlet face facing the high pressure fluid side. In this case, the groove width of the inlet section 10a, the communication section 10c, and the outlet section 10b is fixed.

In the inlet section 10a shown in FIG. 7(a), the groove depth from the land section R to a groove bottom face 10d is set to be h1 on the inlet face facing the high pressure fluid side, and the bottom face 10d is formed in a tapered shape in such a manner that the inlet section becomes gently deeper toward the communication section 10c.

In the inlet section 10a shown in FIG. 7(b), the groove depth from the land section R to the groove bottom face 10d is set to be h1 for a fixed distance m from the inlet face facing the high pressure fluid side, and then the inlet section is formed in a tapered shape so as to become gently deeper toward the communication section 10c.

In the inlet section 10a shown in FIG. 7(c), the groove depth from the land section R to the groove bottom face 10d is set to be h1 for the fixed distance m from the inlet face facing the high pressure fluid side, and then the inlet section is formed to be as deep as the groove depth h by a step section.

As described above, the groove depth h1 of the inlet section 10a of the fluid circulation groove 10 shown in FIG. 7 is set to be smaller than the groove depth h of the communication section 10c and the outlet section 10b. Thus, even in a case where the groove width is fixed, the sectional area of the groove is smaller in the inlet section 10a than in the communication section 10c and the outlet section 10b. Therefore, in comparison to a case where the sectional area of the fluid circulation groove 10 is fixed as the same size as the communication section 10c and the outlet section 10b, the inflow amount of the fluid into the fluid circulation groove 10 is reduced, and the pressure of the fluid in the communication section 10c which is the nearest to the low pressure fluid side is also reduced. As a result, the pressure gradient between the communication section 10c and the low pressure fluid side is decreased, so that the leakage from the communication section 10c which is the nearest to the low pressure fluid side is reduced.

In this example, the section of the bottom wall of the fluid circulation groove 10 is formed in a round bottom shape as well as the first embodiment. Therefore, the retention of the fluid in the vicinity of the bottom wall is prevented, and the fluid circulation effect can be more improved.

It should be noted that although the case where any one of the groove depth and the groove width is fixed and the other is changed is described above, both the groove depth and the groove width may be changed. The point is that the sectional area is required to be changed as desired.

As described above, according to the configuration of the fourth embodiment, by actively guiding the fluid to the sealing faces and discharging the fluid by the fluid circulation groove 10, the fluid between the sealing faces is circulated, concentration of the fluid containing sediment causative substances and the like and retention of wear powder and foreign substances are prevented, and hence formation of sediment is prevented, so that a sealing function of the sealing faces can be maintained for a long time. At that time, at least the sectional area of the groove in the inlet section 10a or the outlet section 10b is set to be different from the sectional area of the groove in the communication section 10c in such a manner that the pressure of the fluid flowing through the fluid circulation groove 10 is lowered in the communication section 10c. More specifically, the sectional area of the groove in the inlet section 10a is set to be smaller than the sectional area of the groove in the communication section 10c and the outlet section 10b, or the sectional area of the groove in the outlet section 10b is set to be larger than the sectional area of the groove in the communication section 10c and the inlet section 10a. Thus, the leakage of the fluid to the low pressure fluid side from the communication section 10c placed in the part of the fluid circulation groove 10 which is the nearest to the low pressure fluid side can be furthermore reduced. The section of the bottom wall of the fluid circulation groove 10 is formed in a round bottom shape as well as the first embodiment. Thus, the retention of the fluid in the vicinity of the bottom wall is prevented, and the fluid circulation effect can be more improved.

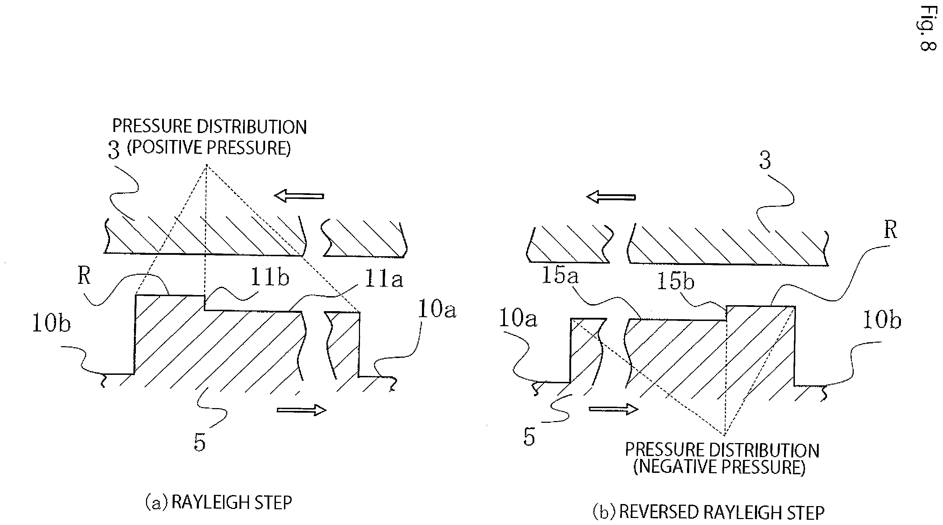

Next, with reference to FIG. 8, the positive pressure generation mechanism formed from the Rayleigh step mechanism or the like and the negative pressure generation mechanism formed from the reversed Rayleigh step mechanism or the like will be described.

In FIG. 8 (a), the rotating ring 3 and the stationary ring 5 serving as the opposing sliding parts relatively slide on each other as shown by arrows. For example, the Rayleigh step 11b is formed on the sealing face of the stationary ring 5 so as to be perpendicular to the relative movement direction and facing the upstream side, and the groove section 11a serving as the positive pressure generation groove is formed on the upstream side of the Rayleigh step 11b. The opposing sealing faces of the rotating ring 3 and the stationary ring 5 are flat.

When the rotating ring 3 and the stationary ring 5 are relatively moved in the directions shown by the arrows, the fluid placed between the sealing faces of the rotating ring 3 and the stationary ring 5 follows and moves in the movement direction of the rotating ring 3 or the stationary ring 5 due to the viscous property thereof. Thus, at that time, positive pressure (dynamic pressure) as shown by broken lines is generated due to existence of the Rayleigh step 11b.

It should be noted that the reference signs 10a and 10b denote the inlet section and the outlet section of the fluid circulation groove, and the reference sign R denotes the land section.

In FIG. 8(b), the rotating ring 3 and the stationary ring 5 serving as the opposing sliding parts also relatively slide on each other as shown by arrows. However, the reversed Rayleigh step 15b is formed on the sealing faces of the rotating ring 3 and the stationary ring 5 so as to be perpendicular to the relative movement direction and facing the downstream side, and the groove section 15a serving as the negative pressure generation groove is formed on the downstream side of the reversed Rayleigh step 15b. The opposing sealing faces of the rotating ring 3 and the stationary ring 5 are flat.

When the rotating ring 3 and the stationary ring 5 are relatively moved in the directions shown by the arrows, the fluid placed between the sealing faces of the rotating ring 3 and the stationary ring 5 follows and moves in the movement direction of the rotating ring 3 or the stationary ring 5 due to the viscous property thereof. Thus, at that time, negative pressure (dynamic pressure) as shown by broken lines is generated due to existence of the reversed Rayleigh step 15b.

It should be noted that the reference signs 10a and 10b denote the inlet section and the outlet section of the fluid circulation groove, and the reference sign R denotes the land section.

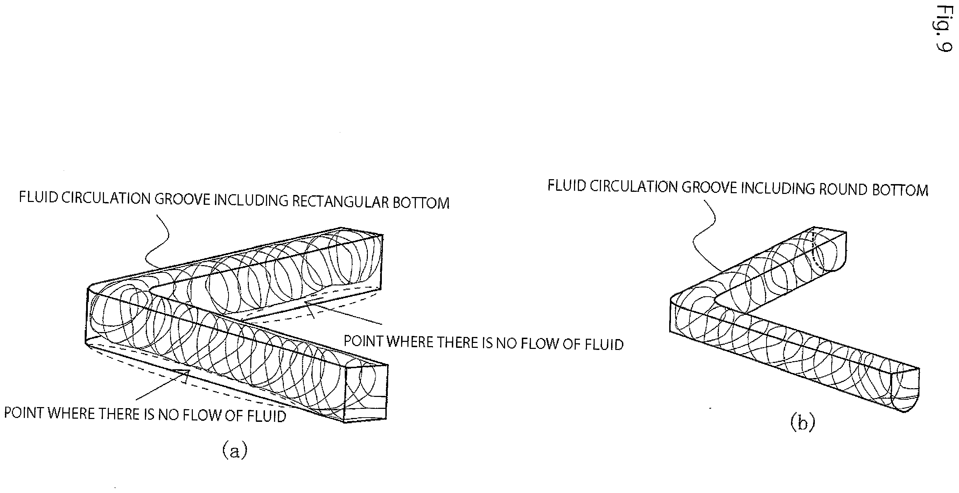

Next, with reference to FIG. 9, a difference between a case where the section of the bottom wall of the fluid circulation groove is formed in a round bottom shape and a case where the section is formed in a rectangular shape will be described.

FIG. 9(a) represents a result of a CFD analysis in a case where the section of the bottom wall of the fluid circulation groove is formed in a rectangular shape. The fluid flows in the fluid circulation groove while whirling from an inlet on the right bottom to an outlet on the right top. However, some points where there is no flow are found on the left and the right of the bottom wall, and it is judged that the fluid is retained in the points.

On the other hand, in a case of FIG. 9(b) representing a result of a CFD analysis in a case where the section of the bottom wall of the fluid circulation groove is formed in a round bottom shape, it can be confirmed that there is almost no retention of the flow.

The embodiments of the present invention are described above with the drawings. However, specific configurations are not limited to these embodiments but modifications and additions that are made within the range not departing from the gist of the present invention are also included in the present invention.

For example, although the example that the sliding parts are used for any of a pair of rotating and stationary sealing rings in a mechanical seal device is described in the above embodiments, the sliding parts can also be utilized as sliding parts of a bearing that slides on a rotating shaft while sealing lubricating oil on one side in the axial direction of a cylindrical sealing face.

In addition, for example, although the case where the high-pressure sealed fluid exists on the outer peripheral side is described in the above embodiments, the present invention can also be applied to a case where the high-pressure fluid exists on the inner peripheral side.

In addition, for example, although the case where the fluid circulation groove, the positive pressure generation mechanism, and the negative pressure generation mechanism or the spiral groove are provided in the stationary ring of the mechanical seal that forms the sliding parts is described in the above embodiments, the fluid circulation groove, the positive pressure generation mechanism, and the negative pressure generation mechanism or the spiral groove may be reversely provided in the rotating ring. In that case, the fluid circulation groove and the spiral groove are not required to be provided up to the outer peripheral side of the rotating ring but only required to communicate with the sealed fluid side.

{REFERENCE SIGNS LIST}

1 Rotating shaft
2 Sleeve
3 Rotating ring
4 Housing
5 Stationary ring
6 Coiled wave spring
7 Bellows
10 Fluid circulation groove
11 Positive pressure generation mechanism (Rayleigh step mechanism)
12 Spiral groove
15 Negative pressure generation mechanism (reversed Rayleigh step mechanism)
R Land section

**Claims**

1. A pair of sliding parts (3, 5) comprising sealing faces that relatively slide on each other, and a fluid circulation groove (10) including an inlet section (10a) where a fluid comes in from a high pressure fluid side, an outlet section (10b) where the fluid goes out to the high pressure fluid side, **characterised in that** a communication section (10c) that provides communication between the inlet (10a) and the outlet section (10b) is provided in at least one of the sealing faces;
the fluid circulation groove (10) is isolated from a low pressure fluid side by a land section (R); and a section of a bottom wall (10e) of the fluid circulation groove (10) is formed in a round bottom shape.

2. The sliding parts (3, 5) as set forth in claim 1, **characterized in that**:

   a plurality of the fluid circulation grooves (10) is provided in the circumferential direction of the sealing face and isolated by the land section (R); and
   the inlet section and the outlet section (10a, 10b) are inclined in the directions in which the sections respectively open from the low pressure side toward the high pressure side in a plan view.

3. The sliding parts (3, 5) as set forth in claim 1 or 2, **characterized in that**:

   a positive pressure generation mechanism (11) including a positive pressure generation groove (11a) that is shallower than the fluid circulation groove (10) is provided in a part surrounded by the fluid circulation groove and the high pressure fluid side; and
   the positive pressure generation mechanism (11) communicates with the inlet section (10a), and is isolated from the outlet section (10b) and the high pressure fluid side by the land section.

4. The sliding parts (3, 5) as set forth in claim 3, **characterized in that**:
   the positive pressure generation mechanism (11) is formed from a Rayleigh step mechanism.

5. The sliding parts (3, 5) as set forth in any of claims 1 to 4, **characterized in that**:

   a spiral groove (12) through which the fluid is discharged to the high pressure fluid side by relative sliding of the sliding parts is provided on the outside of the part surrounded by the fluid circulation groove of one of the sealing faces and the high pressure fluid side; and
   the spiral groove (12) communicates with the high pressure fluid side, and is isolated from the low pressure fluid side by the land section.

6. The sliding parts (3, 5) as set forth in any of claims 1 to 4, **characterized in that**:

   a negative pressure generation mechanism (15) including a negative pressure generation groove (15) that is shallower than the fluid circulation groove (10) is provided on the outside of the part surrounded by the fluid circulation groove of one of the sealing faces and the high pressure fluid side; and
   the negative pressure generation groove communicates with the inlet section, and is isolated from the outlet section and the low pressure fluid side by the land section.

**7.** The sliding parts (3, 5) as set forth in claim 6, **characterized in that**:

the negative pressure generation mechanism is formed from a reversed Rayleigh step mechanism.

**8.** The sliding (3, 5) as set forth in any of claims 1 to 7, **characterized in that**:

at least a sectional area of the groove in the inlet section or the outlet section is set to be different from a sectional area of the groove in the communication section in such a manner that pressure of the fluid flowing through the fluid circulation groove is lowered in the communication section.

**9.** The sliding parts (3, 5) as set forth in claim 8, **characterized in that**:

the sectional area of the groove in the inlet section is set to be smaller than the sectional area of the groove in the communication section and the outlet section.

**10.** The sliding parts (3, 5) as set forth in claim 8, **characterized in that**:

the sectional area of the groove in the outlet section is set to be larger than the sectional area of the groove in the communication section and the inlet section.

**Patentansprüche**

**1.** Paar von Gleitelementen (3, 5) mit relativ aufeinander gleitenden Dichtflächen, und

einer Fluidzirkulationsnut (10), welche einen Einlassbereich (10a), an welchem ein Fluid von einer Hochdruckfluidseite einströmt, und einen Auslassbereich (10b), an welchem das Fluid an die Hochdruckfluidseite ausströmt, aufweist,

**dadurch gekennzeichnet, dass** ein Kommunikationsbereich (10c), welcher eine Kommunikation zwischen dem Einlass- (10a) und dem Auslassbereich (10b) ermöglicht, in mindestens einer der Dichtflächen angeordnet ist,

wobei die Fluidzirkulationsnut (10) von einer Niedrigdruckseite durch einen Stegbereich (R) isoliert ist, und

ein Bereich einer Bodenwand (10e) der Fluidzirkulationsnut (10) rund ausgebildet ist.

**2.** Gleitelemente (3, 5) nach Anspruch 1, **dadurch gekennzeichnet, dass**:

eine Mehrzahl der Fluidzirkulationsnuten (10) in Umfangsrichtung der Dichtfläche angeordnet und durch den Stegbereich (R) isoliert ist, und der Einlassbereich und der Auslassbereich (10a, 10b) in den Richtungen geneigt sind, in denen sich die Bereiche in einer Draufsicht von der Niedrigdruckseite zu der Hochdruckseite hin jeweils öffnen.

**3.** Gleitelemente (3, 5) nach Anspruch 1 oder 2, **dadurch gekennzeichnet, dass**:

ein positiver Druckerzeugungsmechanismus (11) mit einer positiven Druckerzeugungsnut (11a), die flacher als die Fluidzirkulationsnut (10) ist, in einem Bereich angeordnet ist, welcher von der Fluidzirkulationsnut und der Hochdruckfluidseite umgeben ist, und

der positive Druckerzeugungsmechanismus (11) mit dem Einlassbereich (10a) kommuniziert, und von dem Auslassbereich (10b) und der Hochdruckfluidseite durch den Stegbereich isoliert ist.

**4.** Gleitelemente (3, 5) nach Anspruch 3, **dadurch gekennzeichnet, dass**:

der positive Druckerzeugungsmechanismus (11) durch einen Rayleigh-Stufenmechanismus gebildet ist.

**5.** Gleitelemente (3, 5) nach einem der Ansprüche 1 bis 4, **dadurch gekennzeichnet, dass**:

eine Wendelnut (12), durch welche das Fluid an die Hochdruckfluidseite durch relatives Gleiten der Gleitelemente abgegeben wird, an der Außenseite des Bereichs, welcher von der Zirkulationsnut einer der Dichtflächen und der Hochdruckfluidseite umgeben ist, angeordnet ist, und die Wendelnut (12) mit der Hochdruckfluidseite kommuniziert und von der Niedrigdruckfluidseite durch den Stegbereich isoliert ist.

**6.** Gleitelemente (3, 5) nach einem der Ansprüche 1 bis 4, **dadurch gekennzeichnet, dass**:

ein negativer Druckerzeugungsmechanismus (15) mit einer negativen Druckerzeugungsnut (15), die flacher ist als die Fluidzirkulationsnut (10), an der Außenseite des Bereichs, welcher von der Fluidzirkulationsnut einer der Dichtflächen und der Hochdruckfluidseite umgeben ist, angeordnet ist, und

die negative Druckerzeugungsnut mit dem Einlassbereich kommuniziert und von dem Auslassbereich und der Niedrigdruckfluidseite durch den Steg isoliert ist.

**7.** Gleitelemente (3, 5) nach Anspruch 6, **dadurch gekennzeichnet, dass**:

der negative Druckerzeugungsmechanismus durch einen umgekehrten Rayleigh-Stufenmechanismus gebildet ist.

**8.** Gleitelemente (3, 5) nach einem der Ansprüche 1 bis 7, **dadurch gekennzeichnet, dass:**
mindestens eine Schnittfläche der Nut in dem Einlassbereich oder dem Auslassbereich derart verschieden zu einer Schnittfläche der Nut in dem Kommunikationsbereich ist, dass der Druck des Fluids, welches durch die Fluidzirkulationsnut fließt, in dem Kommunikationsbereich verringert wird.

**9.** Gleitelemente (3, 5) nach Anspruch 8, **dadurch gekennzeichnet, dass:**
die Schnittfläche der Nut in dem Einlassbereich so festgelegt ist, dass sie kleiner als die Schnittfläche der Nut in dem Kommunikationsbereich und dem Auslassbereich ist.

**10.** Gleitelemente (3, 5) nach Anspruch 8, **dadurch gekennzeichnet, dass:**
die Schnittfläche der Nut in dem Auslassbereich so festgelegt ist, dass sie größer als die Schnittfläche der Nut in dem Kommunikationsbereich und dem Einlassbereich ist.

**Revendications**

**1.** Paire de parties coulissantes (3, 5) comprenant des faces d'étanchéité qui coulissent relativement l'une sur l'autre, et une rainure de circulation de fluide (10) comprenant une section d'entrée (10a) dans laquelle un fluide rentre à partir d'un côté de fluide haute pression, une section de sortie (10b) dans laquelle le fluide sort vers le côté de fluide haute pression, **caractérisée en ce qu'**une section de communication (10c) qui assure une communication entre l'entrée (10a) et la section de sortie (10b) est réalisée dans au moins l'une des faces d'étanchéité ;
la rainure de circulation de fluide (10) étant isolée vis-à-vis d'un côté de fluide basse pression par une section de portée (R) ; et
une section d'une paroi inférieure (10e) de la rainure de circulation de fluide (10) étant formée sous une forme inférieure ronde.

**2.** Parties coulissantes (3, 5) selon la revendication 1, **caractérisées en ce que :**

une pluralité de rainures de circulation de fluide (10) sont réalisées dans la direction circonférentielle de la face d'étanchéité et sont isolées par la section de portée (R) ; et
la section d'entrée et la section de sortie (10a, 10b) sont inclinées dans les directions dans lesquelles les sections s'ouvrent respectivement à partir du côté basse pression vers le côté haute pression en vue en plan.

**3.** Parties coulissantes (3, 5) selon la revendication 1 ou 2, **caractérisées en ce que :**

un mécanisme de génération de pression positive (11) comprenant une rainure de génération de pression positive (11a) qui est moins profonde que la rainure de circulation de fluide (10) est réalisé dans une partie entourée par la rainure de circulation de fluide et le côté de fluide haute pression ; et
le mécanisme de génération de pression positive (11) communique avec la section d'entrée (10a), et est isolé vis-à-vis de la section de sortie (10b) et du côté de fluide haute pression par la section de portée.

**4.** Parties coulissantes (3, 5) selon la revendication 3, **caractérisées en ce que :**
le mécanisme de génération de pression positive (11) est formé à partir d'un mécanisme à épaulement de Rayleigh.

**5.** Parties coulissantes (3, 5) selon l'une quelconque des revendications 1 à 4, **caractérisées en ce que :**

une rainure en spirale (12) à travers laquelle le fluide est déchargé vers le côté de fluide haute pression par un coulissement relatif des parties coulissantes est réalisée sur l'extérieur de la partie entourée par la rainure de circulation de fluide de l'une des faces d'étanchéité et le côté de fluide haute pression ; et
la rainure en spirale (12) communique avec le côté de fluide haute pression, et est isolée vis-à-vis du côté de fluide basse pression par la section de portée.

**6.** Parties coulissantes (3, 5) selon l'une quelconque des revendications 1 à 4, **caractérisées en ce que :**

un mécanisme de génération de pression négative (15) comprenant une rainure de génération de pression négative (15) qui est moins profonde que la rainure de circulation de fluide (10) est réalisé sur l'extérieur de la partie entourée par la rainure de circulation de fluide de l'une des faces d'étanchéité et le côté de fluide haute pression ; et
la rainure de génération de pression négative communique avec la section d'entrée, et est isolée vis-à-vis de la section de sortie et du côté de fluide basse pression par la section de portée.

**7.** Parties coulissantes (3, 5) selon la revendication 6, **caractérisées en ce que :**
le mécanisme de génération de pression négative est formé à partir d'un mécanisme à épaulement de Rayleigh inversé.

8.  Parties coulissantes (3, 5) selon l'une quelconque des revendications 1 à 7, **caractérisées en ce que** : au moins une surface de section de la rainure dans la section d'entrée ou la section de sortie est établie de façon à être différente d'une surface de section de la rainure dans la section de communication, de telle sorte que la pression du fluide s'écoulant à travers la rainure de circulation de fluide soit abaissée dans la section de communication.

9.  Parties coulissantes (3, 5) selon la revendication 8, **caractérisées en ce que** : la surface de section de la rainure dans la section d'entrée est établie de façon à être inférieure à la surface de section de la rainure dans la section de communication et la section de sortie.

10.  Parties coulissantes (3, 5) selon la revendication 8, **caractérisées en ce que** : la surface de section de la rainure dans la section de sortie est établie de façon à être supérieure à la surface de section de la rainure dans la section de communication et la section d'entrée.

EP 3 073 159 B1

Fig. 1

4

3   5   7

HIGH PRESSURE FLUID SIDE
(SEALED FLUID SIDE)

LOW PRESSURE FLUID SIDE
(ATMOSPHERE SIDE)

2

6

1

S

15

Fig. 2

ROTATING DIRECTION OF
OPPOSING SEALING FACE

HIGH PRESSURE FLUID SIDE

R LOW PRESSURE FLUID SIDE

Fig. 3

(a)

(b)

Fig. 4

Fig. 5

ROTATING DIRECTION OF
OPPOSING SEALING FACE

HIGH PRESSURE FLUID SIDE

LOW PRESSURE FLUID SIDE

Fig. 6

ROTATING DIRECTION OF
OPPOSING SEALING FACE

HIGH PRESSURE FLUID SIDE

LOW PRESSURE FLUID SIDE

(a)

(b)

(c)

EP 3 073 159 B1

Fig. 7

COMMUNICATION SECTION 10c SIDE

R    10a    5

HIGH PRESSURE FLUID SIDE

h

h1

10d    (a)

COMMUNICATION SECTION 10c SIDE

R    10a    5

HIGH PRESSURE FLUID SIDE

h

m

h1

10d    (b)

COMMUNICATION SECTION 10c SIDE

R    10a    5

HIGH PRESSURE FLUID SIDE

h

m

h1

(c)

Fig. 8

EP 3 073 159 B1

PRESSURE DISTRIBUTION
(POSITIVE PRESSURE)

3

R

11b        11a

10b

5

10a

(a) RAYLEIGH STEP

3

R

15a        15b

10a

5

10b

PRESSURE DISTRIBUTION
(NEGATIVE PRESSURE)

(b) REVERSED RAYLEIGH STEP

Fig. 9

FLUID CIRCULATION GROOVE INCLUDING RECTANGULAR BOTTOM

POINT WHERE THERE IS NO FLOW OF FLUID

POINT WHERE THERE IS NO FLOW OF FLUID

(a)

FLUID CIRCULATION GROOVE INCLUDING ROUND BOTTOM

(b)

EP 3 073 159 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7180772 A
- JP 7224948 A
- US 5498007 A
- DE 1221865 B